# EUROPÄISCHE PATENTANMELDUNG

(11) **EP 3 438 517 A1**
(43) Veröffentlichungstag der Anmeldung: **06.02.2019**
(21) Anmeldenummer: 18183180.1
(22) Anmeldetag: 12.07.2018
(51) Int. Cl.: F16N 7/38, F16N 29/04, F16C 41/00, F16C 33/66

(54) **SCHMIERSYSTEM MIT EINEM SIGNALÜBERTRAGUNGSELEMENT**

(30) Priorität: 04.08.2017 DE 102017213589
(71) Anmelder: SKF Lubrication Systems Germany GmbH, 69190 Walldorf (DE)
(72) Erfinder: Kreutzkämper, Jürgen, 74915 Waibstadt-Daisbach (DE); Schmidt, Holger, 14532 Klein-Manchow (DE); Schoenfeld, Andreas, 68789 Sankt Leon-Rot (DE)
(74) Vertreter: Schonecke, Mitja

(57) **Zusammenfassung**

Offenbart wird ein Schmiersystem (1) zum Versorgen mindestens einer Schmierstelle mit Schmierstoff, wobei das Schmiersystem (1) zumindest eine Schmierstofffördervorrichtung (2), die den Schmierstoff in dem Schmiersystem (1) zu der Schmierstelle (6) fördert, eine Schmierstoffverteilvorrichtung (8), die Schmierstoff an die Schmierstelle (6) verteilt, ein Steuergerät (18), das zumindest die Schmierstofffördervorrichtung (2) und/oder die Schmierstoffverteilvorrichtung (8) ansteuert, und mindestens eine Schmiersystemüberwachungsvorrichtung (10, 11, 12, 13) aufweist, die eine Überwachungsgröße des Schmiersystems (1) überwacht, umfasst, wobei das Schmiersystem (1) weiterhin mindestens eine Signalübertragungsvorrichtung (14, 15, 16, 17, 19) aufweist, die dazu ausgelegt ist, ein zu der von der Schmiersystemüberwachungsvorrichtung (10, 11, 12, 13) bereitgestellten Überwachungsgröße korrespondierendes Signal drahtlos an das Steuergerät (18) zu übertragen und/oder von ihm zu empfangen.

## Beschreibung

Die vorliegende Erfindung betrifft ein Schmiersystem zum Versorgen mindestens einer Schmierstelle mit Schmierstoff, wobei das Schmiersystem zumindest eine Schmierstofffördereinrichtung, die den Schmierstoff in dem Schmiersystem zu der Schmierstelle fördert, eine Schmierstoffverteilvorrichtung, die Schmierstoff an die Schmierstelle verteilt und ein Steuergerät, das zumindest die Schmierstofffördereinrichtung und/oder die Schmierstoffverteilvorrichtung ansteuert, aufweist.

Schmiersystem gibt es in einer Vielzahl von Ausgestaltungen, um Schmierstoff an einer zu schmierende Stelle bereitzustellen. Dabei weist ein Schmiersystem üblicherweise eine Schmierstofffördereinrichtung, wie beispielsweise eine Schmierstoffpumpe, und eine Schmierstoffleitung auf, über die Schmierstoff von der Schmierstofffördereinrichtung zu der zu schmierenden Stelle gefördert wird. An der zu schmierenden Stelle ist weiterhin eine Schmierstoffverteileinrichtung vorgesehen, die Schmierstoff an die zu schmierende Stelle verteilt, wobei die Schmierstoffverteilvorrichtung zudem oftmals auch die abgegebene Menge dosiert. Um eine möglichst gute Schmierstoffverteilung in dem System zu erreichen, wird das Schmiersystem üblicherweise zentral über ein Steuergerät angesteuert, das zumindest die Schmierstofffördereinrichtung und die Schmierstoffverteileinrichtung überwacht und ansteuert. Dazu ist das Steuergerät üblicherweise mittels Kabel mit den Schmiersystemkomponenten verbunden, um zum einen die Schmierstoffsysteme anzusteuern, als auch um von den Schmiersystemkomponenten Signale zu empfangen. Neben den anzusteuernden Komponenten sind auch eine Vielzahl von Schmiersystemüberwachungsvorrichtungen bzw. Sensoren in dem Schmiersystem vorhanden, die die Schmierstoffverteilung bzw. den Schmierstoffstrom überwachen, prüfen oder detektieren. Diese Schmiersystemüberwachungsvorrichtungen bzw. Sensoren sind ebenfalls mittels Kabel mit dem Steuergerät verbunden und übermitteln ihre Überwachungsgrößen an das Steuergerät.

Nachteilig an den herkömmlichen Schmiersystemen ist jedoch, dass die Verkabelung innerhalb des Schmiersystems oft sehr aufwändig und teilweise störend ist. Weiterhin können manche Schmiersystemkomponenten oder Bauteile davon nicht mit Schmiersystemüberwachungsvorrichtungen bzw. Sensoren verbunden werden, da eine Verkabelung dieser Schmiersystemüberwachungsvorrichtungen bzw. Sensoren nicht möglich ist.

Aufgabe vorliegender Erfindung ist es deshalb, ein Schmiersystem bereitzustellen, bei dem die Steuereinheit des Schmiersystems auch Signale von Komponenten oder Bauteilen empfangen kann, die an schwer zugänglichen Stellen angeordnet sind.

Diese Aufgabe wird durch ein Schmiersystem gemäß Patentanspruch 1 gelöst.

Im Folgenden wird ein Schmiersystem zum Versorgen mindestens einer Schmierstelle mit Schmierstoff vorgestellt, wobei das Schmiersystem mindestens eine Schmierstofffördereinrichtung, die den Schmierstoff in dem Schmiersystem zu der Schmierstelle fördert, eine Schmierstoffverteilvorrichtung, die Schmierstoff an die Schmierstelle verteilt, und ein Steuergerät, das zumindest die Schmierstofffördereinrichtung und/oder die Schmierstoffverteilvorrichtung ansteuert, umfasst. Weiterhin weist das Schmiersystem mindestens eine Schmiersystemüberwachungsvorrichtung auf, die eine Überwachungsgröße des Schmiersystems überwacht.

Um das Schmiersystem auch basierend auf Überwachungsgrößen von Schmiersystemüberwachungsvorrichtungen, die an schwer zugänglichen Stellen angeordnet sind, ansteuern zu können, weist das Schmiersystem weiterhin mindestens eine Signalübertragungsvorrichtung auf, die dazu ausgelegt ist, ein zu dem von der Schmiersystemüberwachungsvorrichtung bereitgestellten Überwachungsgröße korrespondierendes Signal drahtlos an das Steuergerät und/oder eine funktional dem Schmiersystem zugeordnete Vorrichtung zu übertragen oder von ihm/ihr zu empfangen. Demnach ist die Signalübertragungsvorrichtung bevorzugt nicht nur dazu ausgelegt Signale zu senden, sondern auch zu empfangen. Im Folgenden wird unter dem Begriff Signalübertragungsvorrichtung eine Vorrichtung subsummiert, die Signale sowohl empfangen als auch senden, oder Signale nur senden, oder Signale nur empfangen kann.

Eine funktional dem Schmiersystem zugeordnete Vorrichtung kann beispielsweise eine Anzeigeeinheit sein, die die Signale der Schmiersystemüberwachungsvorrichtung anzeigt. Aber sie kann auch jede andere dem Schmiersystem direkt oder indirekt zugeordnete Komponente sein, die insbesondere auf die Funktionalität des Schmiersystems direkt oder indirekt Einfluss nehmen kann. So kann beispielsweise ein von einer Schmiersystemüberwachungsvorrichtung bereitgestelltes Signal einer Bedienperson rein visuell zugänglich gemacht werden, die dann beispielsweise manuelle Einstellungen an dem Schmiersystem vornimmt. Die Vorrichtung und/oder das Steuergerät kann aber auch in einem zentralen Maschinensteuerraum angeordnet sein, die/das neben dem Schmiersystem eine Vielzahl von Maschinen und/oder zugehörigen Equipmentgegenständen überwacht und steuert.

Dabei kann diese Signalübertragung kontinuierlich und/oder diskontinuierlich erfolgen. Beispielsweise kann die Signalübertragungsweise abhängig sein von der Schmiersystemüberwachungsvorrichtung. So stellen beispielsweise Echtzeitsensoren, wie z.B. ein Temperatursensor, einen kontinuierlichen Signalstrom bereit, während beispielsweise Druckbegrenzungssensoren erst dann ein Signal ausgeben, wenn ein Schwellenwert erreicht ist. Neben der Art der Schmiersystemüberwachungsvorrichtung kann auch die Art der Bestromung der Signalübertragungseinheit und/oder der Schmiersystemüberwachungsvorrichtung für die Signalübertragungsweise maßgeblich sein. Wird beispielsweise die Signalübertragungsvorrichtung kontinuierlich mit Strom versorgt, beispielsweise durch ein zentrales Stromnetz oder eine Batterie, ist eine kontinuierliche Signalübertragung leichter zu erzielen, als bei einer Stromversorgung mittels autarker Energieerzeugungselemente. Diese autarken Energieerzeugungselemente und/oder eine Batterie stellen eine begrenzte Energiemenge bereit, die durch eine kontinuierliche Signalübertragung schneller erschöpft ist als bei einer diskontinuierlichen Signalübertragung.

Gemäß einem weiteren vorteilhaften Ausführungsbeispiel kann das Steuergerät die Schmierstofffördervorrichtung und/oder die Schmierstoffverteilvorrichtung auf Basis des drahtlos übertragenen Signals direkt ansteuern. So kann beispielsweise eine automatisierte Überwachung des Schmiersystems erreicht werden.

Weiterhin kann die Signalübertragungsvorrichtung direkt an einer Schmiersystemkomponente, wie beispielsweise der Schmiersystemüberwachungsvorrichtung, oder an der von der Schmiersystemüberwachungsvorrichtung überwachten Schmiersystemkomponente, angebracht sein, es ist jedoch ebenfalls möglich, dass die Signalübertragungsvorrichtung als eigenständige Schmiersystemkomponente in dem Schmiersystem vorhanden ist. Dabei kann auch beispielsweise eine Schmiersystemüberwachungsvorrichtung an schwer zugänglichen Stellen eingesetzt werden, die aber trotzdem ihre Überwachungsgrößen an das Steuergerät übermitteln kann.

Gemäß einem weiteren vorteilhaften Ausführungsbeispiel ist die mindestens eine Signalübertragungsvorrichtung in der Schmierstofffördereinrichtung und/oder der Schmierstoffverteilvorrichtung und/oder einer weiteren Schmiersystemkomponente beinhaltet. Durch die direkte Integration der Signalübertragungsvorrichtung in die Komponenten des Schmiersystems kann eine sehr einfache und schnelle Signalübertragung innerhalb des Schmiersystems erfolgen. Die Signalübertragungsvorrichtung selbst kann dabei fest in die Komponente des Schmiersystems eingebaut sein und profitiert in dieser Einbausituation beispielsweise von einer zentralen Energieversorgung, die die Schmiersystemkomponente und damit auch die Signalübertragungsvorrichtung mit Energie versorgt. Gleichzeitig ermöglicht der Einbau in die Schmiersystemkomponente selbst, dass die Schmiersystemüberwachungsvorrichtung, die beispielweise ebenfalls in der Schmiersystemkomponente vorgesehen ist, direkt kabelgebunden mit der Signalübertragungsvorrichtung kommunizieren kann, so dass von der Schmiersystemkomponente nur über eine Schnittstelle Signale an das Steuergerät gesendet bzw. von ihm empfangen werden.

Gemäß einem weiteren vorteilhaften Ausführungsbeispiel weist die Schmiersystemüberwachungsvorrichtung weiterhin mindestens einen Sensor auf, der mindestens eine Überwachungsgröße des Schmiersystems detektiert. Dabei ist insbesondere vorteilhaft, wenn die Schmiersystemüberwachungsvorrichtung bzw. der Sensor die mindestens eine Signalübertragungsvorrichtung aufweist, die das Signal, das der detektierten Überwachungsgröße zugeordnet ist, drahtlos an das Steuergerät überträgt. Gerade Sensoren können an schwer zugänglichen Stellen im Schmiersystem nötig sein, an denen eine drahtgebundene Verbindung mit dem Steuergerät oftmals nicht möglich ist. Durch die drahtlose Signalübertragungsvorrichtung können Sensoren deshalb auch an Stellen im Schmiersystem angeordnet werden, die früher einer Sensoranordnung nicht zugänglich waren, da keine Signalübertragungsmöglichkeit von dem Sensor zu dem Steuergerät möglich war.

Gemäß einem weiteren vorteilhaften Ausführungsbeispiel ist die Schmiersystemüberwachungsvorrichtung beispielsweise ein Druckschalter, ein Füllstandschalter, ein Strömungssensor, ein Kolbensensor und/oder ein Ventil. Dank der drahtlosen Signalübertragung ist auch bei diesen Elementen eine beliebige Positionierung im Schmiersystem möglich.

Gemäß einem weiteren vorteilhaften Ausführungsbeispiel ist die Schmierstofffördervorrichtung eine Schmierstoffpumpe und/oder die Schmierstoffverteilvorrichtung ein Einleitungsverteiler, ein Mehrleitungsverteiler, ein Progressivverteiler, eine Mengenbegrenzungseinheit, eine Mengendrosseleinheit, eine Schmierstoffdosiereinheit und/oder ein Ventil. Selbstverständlich können noch weitere Komponenten in dem Schmiersystem vorgesehen sein, und es ist ebenfalls möglich, dass andere als die oben genannten Beispiele als Schmierstofffördervorrichtung oder Schmierstoffverteilvorrichtung fungieren.

Gemäß einem weiteren vorteilhaften Ausführungsbeispiel weist das Schmiersystem weiterhin eine Energiebereitstellungsvorrichtung auf, die die Energie für die Signalübertragungsvorrichtung und/oder die Schmiersystemüberwachungsvorrichtung zumindest teilweise bereitstellt. Diese Energiebereitstellungsvorrichtung kann beispielsweis eine Batterie, eine zentrale Stromversorgung und/oder eine Energieerzeugungsvorrichtung sein, die Energie beispielsweise mittels Induktivität oder über ein oder mehrere Piezoelemente erzeugt. Da oftmals die Schmiersystemkomponenten elektrisch funktionieren und mit einer Stromversorgung ausgestattet sind, kann die Signalübertragungsvorrichtung leicht an diese bereits bestehende Energieversorgung angebunden werden. Ist eine solche Anbindung schwierig, kann entweder eine Batterie diese Aufgabe übernehmen oder Energie kann direkt an der Signalübertragungsvorrichtung erzeugt werden, beispielsweise über Induktion oder Verformungsenergie. Dazu ist insbesondere vorteilhaft, wenn eine Komponente des Schmiersystems und/oder eine die Komponenten des Schmiersystems verbindende Schmierstoffleitung mindestens ein sich bewegendes Element aufweist, und das Energieerzeugungselement mit dem sich bewegenden Element zusammenwirkt und die von der Signalübertragungsvorrichtung benötigte Energie erzeugt.

Dadurch können Signalübertragungsvorrichtungen an Stellen angeordnet werden, die früher einer Signalübertragungsmöglichkeit nicht zugänglich waren.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:

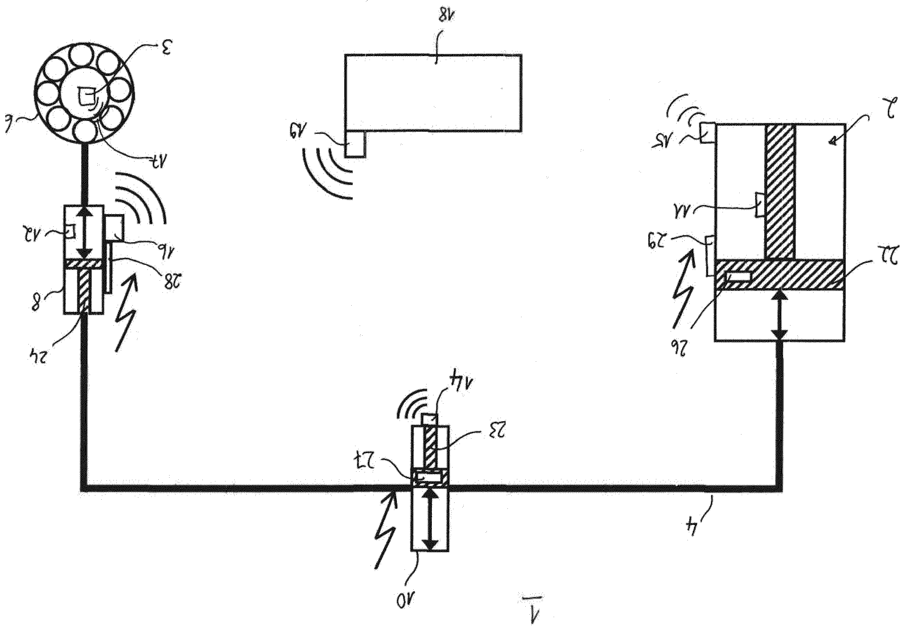

- Fig. 1:: Eine schematische Darstellung eines ersten bevorzugten Ausführungsbeispiels eines erfindungsgemäßen Schmiersystems.

Im Folgenden werden gleiche oder funktionell gleichwirkende Elemente mit denselben Bezugszeichen gekennzeichnet.

Figur 1 zeigt schematisch ein Schmiersystem 1 mit einer Schmierstofffördereinrichtung 2, die mit einer Schmierstoffleitung 4 verbunden ist, um Schmierstoff zu einer zu schmierenden Stelle 6, die hier als Lager dargestellt ist, zu fördern. Um dem Lager eine genau zugemessene Menge an Schmierstoff zu übergeben bzw. allgemein Schmierstoff an das Lager zu verteilen, ist weiterhin eine Schmierstoffverteilvorrichtung 8 vorgesehen, die stromauf des Lagers 6 angeordnet ist. Die Schmierstoffverteilvorrichtung kann beispielsweise ein Einleitungsverteiler oder Progressivverteiler sein. Wie weiter Figur 1 zu entnehmen ist, ist an der Schmierstoffleitung 4 weiterhin eine Schmiersystemüberwachungsvorrichtung in Form eines Sensors 10 vorgesehen, die beispielsweise einen Schmiermittelfluss durch die Leitung 4 oder dessen Temperatur oder Viskosität überwacht. In dem in Figur 1 dargestellten Ausführungsbeispiel ist die Schmiersystemüberwachungsvorrichtung 10 ein Druckschalter, der den Druck des in der Schmierstoffleitung 4 transportierten Schmierstoffs misst.

Wie weiterhin in Fig 1 dargestellt, weist das Schmiersystem 1 eine Signalübertragungsvorrichtung 14 auf, mittels derer beispielsweise eine Überwachungsgröße der Schmiersystemüberwachungsvorrichtung 10 an ein entfernt angeordnetes Steuergerät 18 oder an einen entfernt angeordneten Benutzer übertragen oder von ihm empfangen werden kann. Alternativ oder zusätzlich kann auch von dem Steuergerät 18 ein Signal ausgegeben werden, das beispielsweise von der Signalübertragungsvorrichtung 14 der Schmierstoffverteilvorrichtung 8 empfangen wird, um die an das Lager 6 abzugebende Schmierstoffmenge zu steuern. Dazu weist auch das Steuergerät 18 eine Signalübertragungsvorrichtung 19 auf.

Dem in Fig. 1 dargestellten Ausführungsbeispiel ist zu entnehmen, dass das Schmiersystem weitere Schmiersystemüberwachungsvorrichtung 11, 12, 13 aufweist, so dass das Schmiersystem 1 auch basierend auf Überwachungsgrößen von Schmiersystemüberwachungsvorrichtungen 11, 12, 13, die an schwer zugänglichen Stellen angeordnet sind, angesteuert werden kann. Dazu sind in dem Schmiersystem 1 weitere Signalübertragungsvorrichtung 15, 16, 17 vorgesehen, die dazu ausgelegt ist, ein zu dem von der Schmiersystemüberwachungsvorrichtung 11, 12, 13 bereitgestellten Überwachungsgröße korrespondierendes Signal drahtlos an das Steuergerät 18 zu übertragen oder von ihm zu empfangen. Dabei kann auch an der zu schmierenden Stelle eine Schmiersystemüberwachungsvorrichtung 13 bzw. eine Signalübertragungsvorrichtung 17 angeordnet sein.

Die Schmiersystemüberwachungsvorrichtung 10, 11, 12, 13 und die Signalübertragungsvorrichtung 14, 15, 16, 17, 19 können separate Elemente sein, es ist jedoch auch möglich, dass die Schmiersystemüberwachungsvorrichtung 10, 11, 12, 13 und die Signalübertragungsvorrichtung 14, 15, 16, 17, 19 integral ausgebildet sind.

Weiterhin kann die Signalübertragungsvorrichtung 14, 15, 16, 17, 19 direkt an der von der Schmiersystemüberwachungsvorrichtung 10, 11, 12, 13 überwachten Schmiersystemkomponente 2, 4, 6, 8, 10, 18 angebracht sein, es ist jedoch ebenfalls möglich, dass die Signalübertragungsvorrichtung 14, 15, 16, 17, 19 als eigenständige Schmiersystemkomponente in dem Schmiersystem 1 vorhanden ist.

Wenn die Signalübertragungsvorrichtung 14, 15, 16, 17, 19 direkt in die Komponenten des Schmiersystems 1 integriert ist, kann eine sehr einfache und schnelle Signalübertragung innerhalb des Schmiersystems 1 erfolgen. Die Signalübertragungsvorrichtung 14, 15, 16, 17, 19 selbst kann dabei fest in die Komponente des Schmiersystems 1 eingebaut sein und profitiert in dieser Einbausituation beispielsweise von einer zentralen Energieversorgung (nicht dargestellt), die die Schmiersystemkomponente 2, 4, 6, 8, 10, 18 und damit auch die Signalübertragungsvorrichtung 14, 15, 16, 17, 19 mit Energie versorgt. Gleichzeitig ermöglicht der Einbau in die Schmiersystemkomponente 2, 4, 6, 8, 10, 18 selbst, dass die Schmiersystemüberwachungsvorrichtung 10, 11, 12, 13, die beispielweise ebenfalls in der Schmiersystemkomponente 2, 4, 6, 8, 10, 18 vorgesehen ist, direkt kabelgebunden mit der Signalübertragungsvorrichtung 14, 15, 16, 17, 19 kommunizieren kann, so dass von der Schmiersystemkomponente 2, 4, 6, 8, 10, 18 nur über eine Schnittstelle Signale an das Steuergerät 18 gesendet bzw. von ihm empfangen werden.

Wie weiterhin in Figur 1 schematisch dargestellt, weisen die Schmierstofffördereinrichtung 2, die Schmierstoffverteilvorrichtung 8 und die Sensoreinheit 10 Kolben 22, 23, 24 auf, die für eine Schmiermittelverteilung bzw. -förderung oder -zumessung sorgen. Diese Kolben 22, 23, 24 stellen beispielhaft sich bewegende Elemente dar. Die sich bewegenden Elemente, hier die Kolben 22, 23, 24, wirken weiterhin mit Energieerzeugungselementen 26, 27, 28, 29 zusammen, wobei schematisch am Schmierstoffverteilelement 8 ein induktives Element 28 angeordnet ist, während an der Schmierstofffördereinrichtung 2 und am Sensor 10 Piezoelemente 26, 27 vorgesehen ist. Dabei können die Komponenten 2, 4, 8, 10 des Schmiersystems nicht nur eine Art Energieerzeugungselement aufweisen, sondern es ist auch möglich, wie beispielsweise bei der Schmierstofffördereinrichtung 2 gezeigt, unterschiedliche Energieerzeugungselemente 26, 29 an einer Komponente vorzusehen. So kann beispielsweise an der Schmierstofffördervorrichtung 2 weiterhin noch ein induktives Energieerzeugungselement 29 vorgesehen sein.

Diese Energieerzeugungselemente wirken auf bekannte Weise, wobei die Piezoelemente elektrische Energie aus einer Verformung des Elements gewinnen, während die induktiven Elemente Strom über zwei zueinander bewegte Spulen erzeugen. Diese Energie erzeugenden Elemente wirken mit den sich bewegenden Elementen zusammen, um Energie zu erzeugen, die in dem Schmiersystem 1 zur Verwendung bereitgestellt wird. Die Energieerzeugung ist mittels des Symbols für Strom illustriert.

Diese Energie kann beispielsweise den Schmiersystemüberwachungsvorrichtungen und/oder Signalübertragungsvorrichtungen bereitgestellt werden.

Weiterhin kann in dem Schmiersystem 1 mindestens eine Energiespeichereinheit (nicht dargestellt) vorgesehen sein, die mit den Energieerzeugungselementen zusammenwirkt, um Energie für eine spätere oder energiereiche Anwendung zu speichern. So kann beispielsweise über die gespeicherte Energie eine Notfallstromversorgung für einen Motor (nicht dargestellt) der Schmierstofffördervorrichtung 2 bereitgestellt werden. Die Energieübertragung zwischen Energiespeichereinheit und Energieverbraucher kann beispielsweise mittels einer Verkabelung erfolgen.

Insgesamt kann mit dem erfindungsgemäßen Schmiersystem ein Schmiersystem bereitgestellt werden, dessen einzelne und oft schwer zugängliche Komponenten mit Schmiersystemüberwachungsvorrichtungen ausgestattet werden können, ohne, dass diese mit dem Steuergerät verkabelt werden müssen. Durch die drahtlose Signalübertragung in dem System kann ein Schmiersystem bereitgestellt werden, das einfacher und genauer überwacht werden kann. Da die Signalübertragungsvorrichtungen und/oder die Schmiersystemüberwachungsvorrichtungen nur relativ wenig Energie verbrauchen, ist es auch möglich, Energieerzeugungselemente, wie beispielsweise Piezoelemente und/oder Induktionselemente einzusetzen, um die benötigte Energie direkt selbst zu erzeugen.

### Bezugszeichenliste

- 1: Schmiersystem
- 2: Schmierstofffördereinrichtung
- 4: Schmierstoffleitung
- 6: zu schmierende Stelle
- 8: Schmierstoffverteilvorrichtung
- 10, 11, 12, 13: Schmiersystemüberwachungsvorrichtung
- 14, 15, 16, 17: Signalübertragungsvorrichtung
- 18: Steuergerät
- 19: Signalübertragungsvorrichtung
- 22, 23, 24: Kolben
- 26, 27, 28, 29: Energieerzeugungselemente

## Patentansprüche

1. Schmiersystem (1) zum Versorgen mindestens einer Schmierstelle mit Schmierstoff, wobei das Schmiersystem (1) zumindest eine Schmierstofffördervorrichtung (2), die den Schmierstoff in dem Schmiersystem (1) zu der Schmierstelle (6) fördert, eine Schmierstoffverteilvorrichtung (8), die Schmierstoff an die Schmierstelle (6) verteilt, ein Steuergerät (18), das zumindest die Schmierstofffördervorrichtung (2) und/oder die Schmierstoffverteilvorrichtung (8) ansteuert, und mindestens eine Schmiersystemüberwachungsvorrichtung (10, 11, 12, 13), die eine Überwachungsgröße des Schmiersystems (1) überwacht, umfasst,
**dadurch gekennzeichnet, dass**
das Schmiersystem (1) weiterhin mindestens eine Signalübertragungsvorrichtung (14, 15, 16, 17, 19) aufweist, die dazu ausgelegt ist, ein zu der von der Schmiersystemüberwachungsvorrichtung (10, 11, 12, 13) bereitgestellten Überwachungsgröße korrespondierendes Signal drahtlos an das Steuergerät (18) und/oder an eine dem Schmiersystem funktional zugeordnete Vorrichtung zu übertragen und/oder von ihm/ihr zu empfangen.

2. Schmiersystem (1) nach Anspruch 1, wobei die Signalübertragungsvorrichtung diskontinuierlich bestromt ist und/oder dazu ausgelegt ist, das Signal diskontinuierlich zu übertragen.

3. Schmiersystem (1) nach Anspruch 1 oder 2, wobei das Steuergerät (18) die Schmierstofffördervorrichtung (2) und/oder die Schmierstoffverteilvorrichtung (8) auf Basis des drahtlos übertragenen Signals angesteuert.

4. Schmiersystem nach einem der vorhergehenden Ansprüche, wobei die dem Schmiersystem funktional zugeordnete Vorrichtung eine extern angeordnete Vorrichtung, insbesondere eine Anzeigeeinheit, ist.

5. Schmiersystem (1) nach einem der vorhergehenden Ansprüche, wobei die mindestens eine Signalübertragungsvorrichtung (14, 15, 16, 17, 19) in der Schmierstofffördervorrichtung (2) und/oder der Schmierstoffverteilvorrichtung (8) und/oder in einer weiteren Schmiersystemkomponente (2, 4, 6, 8, 10, 18) beinhaltet ist.

6. Schmiersystem (1) nach einem der vorhergehenden Ansprüche, wobei die Schmiersystemüberwachungsvorrichtung (10, 11, 12, 13) die mindestens eine Signalübertragungsvorrichtung (14, 15, 16, 17, 19) aufweist.

7. Schmiersystem (1) nach einem der vorhergehenden Ansprüche, wobei die Schmiersystemüberwachungsvorrichtung (10, 11, 12, 13) mindestens einen Sensor (10) aufweist, der mindestens eine Überwachungsgröße des Schmiersystems (1) detektiert.

8. Schmiersystem (1) nach einem der vorhergehenden Ansprüche, wobei die Schmiersystemüberwachungsvorrichtung (10, 11, 12, 13) ein Druckschalter, ein Füllstandschalter, ein Strömungssensor, ein Kolbensensor und/oder ein Ventil ist.

9. Schmiersystem (1) nach einem der vorhergehende Ansprüche, wobei die Schmierstofffördervorrichtung (2) eine Schmierstoffpumpe ist; und/oder die Schmierstoffverteilvorrichtung (8) ein Einleitungsverteiler, ein Zweileitungsverteiler, ein Mehrleitungsverteiler, ein Progressivverteiler, eine Mengenbegrenzeinheit, eine Mengendrosseleinheit, eine Schmierstoffdosiereinheit und/oder ein Ventil ist.

10. Schmiersystem (1) nach einem der vorhergehenden Ansprüche, wobei das Schmiersystem (1) weiterhin eine Energiebereitstellungsvorrichtung (26, 27, 28, 29) aufweist, die Energie der Signalübertragungsvorrichtung (14, 15, 16, 17, 19) und/oder der Schmiersystemüberwachungsvorrichtung (10, 11, 12, 13) bereitstellt.

11. Schmiersystem (1) nach Anspruch 9, wobei die Energiebereitstellungsvorrichtung (26, 27, 28, 29) eine Batterie, eine zentrale Stromversorgung und/oder eine Energieerzeugungsvorrichtung ist.

12. Schmiersystem (1) nach einem der vorhergehenden Ansprüche, wobei eine Komponente (2, 4, 6, 8, 10, 18) des Schmiersystems und/oder eine die Komponenten des Schmiersystems verbindende Schmierstoffleitung (4) mindestens ein sich bewegendes Element (22, 23, 24) aufweist, und das Energieerzeugungselement (26, 27, 28, 29) mit dem sich bewegenden Element (22, 23, 24) zusammenwirkt, und die von der Signalübertragungsvorrichtung (14, 15, 16, 17, 19) benötigte Energie erzeugt.

13. Schmiersystem (1) nach Anspruch 10 oder 11, wobei das Energieerzeugungselement (26, 27, 28, 29) ein Piezoelement und/oder ein induktives Element ist.
